# EUROPÄISCHE PATENTSCHRIFT

(11) **EP 3 210 002 B1**
(45) Veröffentlichungstag und Bekanntmachung des Hinweises auf die Patenterteilung: **14.04.2021**
(21) Anmeldenummer: 15787922.2
(22) Anmeldetag: 21.10.2015
(51) Int. Cl.: G01N 21/59, G01N 21/896, G01N 21/84

(54) **VERFAHREN UND VORRICHTUNG ZUR ÜBERPRÜFUNG DES TRANSMISSIONSGRADS EINES FLACHGLAS-SUBSTRATS**
METHOD AND DEVICE FOR EXAMINING THE TRANSMITTANCE OF A SHEET GLASS SUBSTRATE
PROCÉDÉ ET DISPOSITIF POUR L'EXAMINATION DE LA TRANSMITTANCE D'UN SUBSTRAT DE VERRE PLAT

(30) Priorität: 21.10.2014 DE 102014115318
(43) Veröffentlichungstag der Anmeldung: 30.08.2017
(73) Patentinhaber: Cibite AG, 86609 Donauwörth (DE)
(72) Erfinder: OLSCHEWSKI, Dieter, 86609 Donauwörth (DE); DÖHRING, Ina, 86156 Augsburg (DE); LÜKE, Peter, 86687 Kaisheim (DE)
(74) Vertreter: Patentanwälte Bauer Vorberg Kayser
(86) Internationale Anmeldenummer: PCT/EP2015/074290
(87) Internationale Veröffentlichungsnummer: WO 2016/062733

(56) Entgegenhaltungen:
- EP-A1- 2 472 251
- EP-A2- 2 615 446
- EP-A2- 2 618 137
- DE-A1- 2 757 196
- DE-A1- 10 010 213

## Beschreibung

Die Erfindung betrifft ein Verfahren und eine Vorrichtung zur Überprüfung des Transmissionsgrads eines Flachglas-Substrats mit einer Messvorrichtung, mit der Licht wenigstens einer Lichtquelle von einer Seite des Flachglas-Substrats durch das Flachglas-Substrat hindurch auf die gegenüber liegende Seite des Flachglas-Substrats geleitet wird, wo es durch wenigstens eine Empfängereinheit erfasst wird und anhand eines Vergleichs zwischen der Intensität des von der Lichtquelle ausgesandten Lichts und des auf die Empfängereinheit fallenden Lichts der Transmissionsgrad des Flachglas-Substrats bestimmt wird.

Bei der Herstellung von Flachglas ist ein kontinuierlicher Transmissionsgrad als eine von verschiedenen Qualitätsanforderungen zu erfüllen. Ein weiterer wesentlicher Parameter ist beispielsweise die Dicke des Glases. Ein kontinuierlicher Transmissionsgrad ist insbesondere bei der Verwendung von Flachglas als Solarglas zu beachten, bei dem es sich um ein spezielles Glas für thermische Solarkollektoren und die Photovoltaik handelt. Um die auftreffende Sonnenstrahlung optimal nutzen können, muss ein möglichst hoher Transmissionsgrad der aufliegenden Glasschicht gewährleistet werden.

Für den Einsatz als Solarglas vorgesehenes Flachglas stellt dabei besonders hohe Anforderungen an eine durchgängige Homogenität. Bei Flachglas selbst wird zwischen Floatglas und Walzglas unterschieden, wobei die Art des Glases vom jeweils gewählten Produktionsprozess abhängt. Beide Glassorten werden als Solarglas verwendet, wobei planes Glas im Floatprozess und strukturiertes Glas (Strukturglas) im Walzprozess hergestellt werden kann. Beide Produktionsprozesse sind typischerweise endlose kontinuierliche Verfahren, bei denen die Glasschmelze ständig flach auf ein Zinnbad gezogen bzw. durch rotierende Walzen gewalzt wird. Erst nach Durchlaufen einer Kühlung wird das Glas zugeschnitten.

Der Prozess der Herstellung von Solarglas erfordert über die gesamte Produktionsbreite einen gesicherten, konstanten Transmissionsgrad. Abweichungen hiervon führen unmittelbar zu Qualitätsproblemen bei der Weiterverarbeitung der Glasplatten zu Solarmodulen. Bei dem oftmals für die Herstellung von Solarmodulen verwendetem Strukturglas handelt es sich um Gussglas, bei dem die Struktur durch rotierende Walzen aufgeprägt wird. Bereits die Temperatur dieser Walzen und deren Laufgenauigkeit beeinflussen die Glasdicke und den Transmissionsgrad. Daneben sind Einflussgrößen wie die Inhomogenität des Glasgemisches oder Verunreinigungen relevant, die zu anderen Strukturen führen können.

Da beispielsweise bei der Herstellung von Photovoltaikmodulen die Solarzellen und die Glasabdeckung irreversibel miteinander verbunden werden, bewirkt eine schlechte Glasqualität zusätzlich einen Ausschuss an teuren photovoltaischen Zellen. Ein nicht ausreichender Transmissionsgrad kann nämlich derzeit erst bei der Ausgangsprüfung des Endproduktes Solarglas oder häufig erst im Solarmodul selbst festgestellt werden. Daher sind die Ausschusskosten hierbei besonders hoch. Das beschichtete Glas stellt dann Sondermüll dar und die Ausschussquote liegt erfahrungsgemäß im hohen einstelligen Prozentbereich. Diese hohen betriebs- sowie volkswirtschaftlichen Schäden und die gleichzeitige Ressourcenvernichtung (u.a. Silizium in der Glas- und Solarzellenproduktion) ist nur durch eine möglichst frühe Fehlererkennung in der Glasproduktion reduzierbar.

Zur Überprüfung des Transmissionsgrads wurden bereits Messverfahren entwickelt, mit denen sich die zu überwachenden Parameter stichprobenartig überprüfen lassen. Hierbei werden üblicherweise Spektralphotometer eingesetzt, bei denen die Wellenlänge des einfallenden Lichtstrahls variiert und der durchgelassene Anteil in Abhängigkeit von der Wellenlänge registriert wird. Ein derartiges Messverfahren wird beispielsweise in der DE 27 57 196 A1 beschrieben.

Gegebenenfalls wird hierbei auch die Winkelabhängigkeit der Einstrahlung des Lichts berücksichtigt. Derartige Messungen sind jedoch sehr aufwendig und werden üblicherweise nur unter Laborbedingungen durchgeführt und sind für den Einsatz im Produktionsprozess nicht geeignet.

Aus der EP 2 615 446 A2 ist ein Messverfahren zur Bestimmung eines Transmissionsgrads eines Flachglassubstrats bekannt, bei dem das Flachglassubstrat mit Weißlicht einer Halogenlampe durchstrahlt und das transmittierte Weißlicht mit einer Fotodiode detektiert wird. Bei dem in der EP 2 472 251 A1 beschriebenen Verfahren wird der Transmissionsgrad eines Flachglassubstrats mittels monochromatischem Laserlicht der Wellenlänge 550 nm bestimmt.

Wenn mit einem Messverfahren ein verringerter Transmissionsgrad ermittelt wird, kann ferner nur schwer bestimmt werden, ob dieser durch eine Verunreinigung des

Glases oder andere Faktoren wie beispielsweise eine Dickenabweichung oder Fehler auf der Oberfläche des Glases bewirkt werden. Unterschiedliche Ursachen für einen verringerten Transmissionsgrad würden jedoch unter Umständen unterschiedliche Gegenmaßnahmen erfordern. Bei verringerten Transmissionsgraden, welche durch Verunreinigungen des Flachglas-Substrats verursacht werden, kann beispielsweise so in den Produktionsprozess eingegriffen werden, dass diese Verunreinigung durch die Anpassung von Beimischungen behoben wird. Dickenveränderungen und Fehler in der Oberfläche des Glases würden hingegen zur Behebung andere Gegenmaßnahmen erfordern. Es besteht daher ein Bedarf nach einem Verfahren zur Überprüfung des Transmissionsgrads eines Flachglas-Substrats, mit dem sich die Art einer Ursache für einen verringerten Transmissionsgrad genauer eingrenzen lässt.

Aufgabe der Erfindung ist es daher, ein Verfahren und eine Vorrichtung zur Überprüfung des Transmissionsgrads eines Flachglas-Substrats bereitzustellen, mit dem sich die Art einer Ursache für einen verringerten Transmissionsgrad ermitteln lässt. Insbesondere sollen sich das Verfahren und die Vorrichtung dabei zur Einbindung in eine flächendeckende Transmissionsgradmessung eignen, die in einen Produktionsprozess integrierbar ist.

Erfindungsgemäß wird diese Aufgabe durch ein Verfahren gemäß dem unabhängigen Anspruch 1 gelöst. Vorteilhafte Weiterbildungen dieses Verfahrens ergeben sich aus den Unteransprüchen 2-13. Ferner wird die Aufgabe durch eine Vorrichtung gemäß dem unabhängigen Anspruch 14 gelöst. Vorteilhafte Weiterbildungen der Vorrichtung ergeben sich aus den Ansprüchen 15-19.

Das erfindungsgemäße Verfahren gemäß Anspruch 1 eignet sich zur Überprüfung des Transmissionsgrads eines Flachglas-Substrats mit einer Messvorrichtung, mit der Licht wenigstens einer Lichtquelle von einer Seite des Flachglas-Substrats durch das Flachglas-Substrat hindurch auf die gegenüber liegende Seite des Flachglas-Substrats geleitet wird, wo es durch wenigstens eine Empfängereinheit erfasst wird und anhand eines Vergleichs zwischen der Intensität des von der Lichtquelle ausgesandten Lichts und des auf die Empfängereinheit fallenden Lichts der Transmissionsgrad des Flachglas-Substrats bestimmt wird.

Erfindungsgemäß erzeugt eine Lichtquelle in einer ersten Messung polychromatisches Licht, wobei der Transmissionsgrad an einer Stelle des Flachglas-Substrats anhand des Lichts bestimmt wird, das von einer Empfängereinheit registriert wird. Eine Lichtquelle erzeugt ferner in wenigstens einer weiteren Messung monochromatisches Licht einer definierten Wellenlänge, wobei der Transmissionsgrad möglichst an der gleichen Stelle des Flachglas-Substrats ebenfalls anhand des Lichts ermittelt wird, das von einer Empfängereinheit registriert wird. Anhand dieser Messergebnisse wird durch einen Vergleich der wenigstens zwei Messungen ermittelt, ob der Transmissionsgrad bei allen Messungen annähernd gleich oder nicht gleich ist. Auf der einen Seite wird somit eine Transmissionsmessung mit polychromatischem Licht wie beispielsweise Weißlicht durchgeführt, um verlässlich verringerte Transmissionsgrade zu detektieren, die beliebige Ursachen haben können. Ergänzend werden Messungen mit monochromatischem Licht durchgeführt, um die Ursachen genauer spezifizieren zu können.

Vorzugsweise werden zu einer ersten Messung mit polychromatischem Licht zwei oder mehr weitere Messungen mit monochromatischem Licht unterschiedlicher Wellenlängen durchgeführt. So kann der Vergleich der ermittelten Transmissionsgrade anhand einer Vielzahl von Wellenlängen erfolgen. Wird im ersten Messschritt an einer Stelle im Flachglas-Substrat ein gegenüber einem Sollwert verringerter Transmissionsgrad ermittelt, kann so mittels weiterer Messungen mit monochromatischem Licht genauer spezifiziert werden, ob dieser eine wellenlängenabhängige oder wellenlängenunabhängige Ursache hat. Ursachen für eine verminderte Transmission können verschiedene Faktoren sein, wozu beispielsweise eine erhöhte Absorption im Glas selbst gehört. Dies kann verursacht sein durch Verunreinigungen im Glas. Typisch sind hier eisenhaltige Beimischungen, aber es gibt auch andere mineralische Verunreinigungen, welche die Absorption im Glas erhöhen können. Die Dicke des Glases hat ebenfalls einen Einfluss auf den Transmissionsgrad, dieser Einfluss ist jedoch verhältnismäßig gering.

Ist der so bestimmte Transmissionsgrad bei allen Messungen annähernd gleich, d.h. die Transmission verändert sich nicht wellenlängenabhängig, kann daher davon ausgegangen werden, dass ein detektierter verminderter Transmissionsgrad eine wellenlängenunabhängige Ursache hat. Es handelt sich somit eventuell um eine Dickenänderung oder einen Fehler auf dem Glas. Zumindest handelt es sich voraussichtlich nicht um eine Verunreinigung im Glas, denn deren Transmission wäre wellenlängenabhängig, da sie Licht unterschiedlicher Wellenlängen unterschiedlich stark absorbiert. Der Transmissionsgrad wäre dann an dieser Stelle nicht bei allen Messungen annähernd gleich.

Auf diese Weise kann ein detektierter Transmissionsgrad somit in eine erste Gruppe kategorisiert werden, wenn er bei allen Messungen annähernd gleich ist, während er in eine zweite Gruppe kategorisiert wird, wenn er bei allen Messungen nicht gleich ist.

Dabei bezeichnen die Begriffe "erste" und "weitere" Messung keine zeitliche Reihenfolge der Messschritte, sondern die Messung mit polychromatischem Licht kann beispielsweise auch vor der Messung bzw. den Messungen mit monochromatischem Licht durchgeführt werden. Es handelt sich lediglich um verschiedene Messungen mit unterschiedlichem Licht. Die diversen Messungen können ferner mit den gleichen oder mit unterschiedlichen Lichtquellen und Empfängereinheiten durchgeführt werden. In einer besonders bevorzugten Ausführungsform der Erfindung werden jedoch alle Messungen mit einer Messvorrichtung durchgeführt, welche eine Empfängereinheit und eine Lichtquelle aufweist, deren Strahlung variierbar ist.

Ferner werden alle Messungen vorzugsweise mit demselben Messverfahren durchgeführt, um eine Vergleichbarkeit der Messungen zu gewährleisten. Hierbei kann es sich beispielsweise um ein oder mehrere Punktmessungen handeln. Als Empfänger können sowohl Punktsensoren als auch Flächensensoren verwendet werden. In einer vorteilhaften Ausführungsform der Erfindung handelt es sich bei der verwendeten Lichtquelle jedoch um eine flächenhafte diffuse Lichtquelle und die Empfängereinheit umfasst wenigstens einen ortsauflösenden Empfänger, zwischen denen das Flachglas-Substrat positioniert wird. Durch eine Auswertung von Helligkeitswerten im Messbild des ortsauflösenden Empfängers kann so der Transmissionsgrad ortsaufgelöst in einer Teilfläche des Flachglas-Substrats ermittelt werden, welche vom Messbild abgedeckt wird.

Die Überprüfung des Transmissionsgrads an einer Stelle des Flachglas-Substrats kann so erweitert werden um die Bestimmung innerhalb einer größeren Fläche. Der Vergleich zwischen mehreren Messungen erfolgt dann ebenfalls innerhalb einer größeren Fläche. Mit der flächenhaften diffusen Lichtquelle kann eine Fläche des Flachglas-Substrats homogen durchleuchtet werden, und mittels eines oder mehrerer ortsauflösender Empfänger ist es möglich, anhand dieses Lichts auch den Transmissionsgrad ortsaufgelöst innerhalb der Teilfläche des Flachglas-Substrats zu ermitteln, die von dem Messbild des jeweiligen Empfängers abgedeckt wird.

Als ortsauflösender Empfänger wird vorzugsweise eine Kamera verwendet. Hierbei kann es sich um eine Kamera mit CMOS- oder CCD-Chip handeln, mit der sich ein Messbild erstellen lässt, das beispielsweise eine Teilfläche in der Größenordnung von 5 x 10 cm oder 10 x 20 cm auf dem Flachglas-Substrat abgedeckt.

Um die Genauigkeit bei der Ermittlung des Transmissionsgrads zu erhöhen, ist vorzugsweise vorgesehen, dass im Messbild des ortsauflösenden Empfängers eine Bildbearbeitung durchgeführt wird. Die Ermittlung des Transmissionsgrads erfolgt dann anhand der Helligkeitswerte nach der Bildbearbeitung des Messbilds. Die Bildbearbeitung kann dabei insbesondere für Messpunkte im Bild eine Mittelwertbildung für Helligkeitswerte über mehrere Punkte wenigstens eines Ausschnitts des Messbilds beinhalten. Bei Verwendung einer flächenhaften diffusen Lichtquelle kommt es zu einer Überlagerung einer Vielzahl von Punktquellen und damit zu einem eher statistischen Messwert, der durch die Überlagerung der verschiedenen Punktquellen und Durchgänge durch das Glas entsteht. Es wird davon ausgegangen, dass dieser Messwert im Mittel überall gleich sein sollte.

Die für die Mittelwertbildung verwendeten Ausschnitte innerhalb des Messbildes sollten vorzugsweise ausreichend groß gewählt sein, damit mögliche Ablenkungen des Lichts beim Durchtritt durch das Flachglas-Substrats innerhalb eines Ausschnitts erfasst und in die Mittelwertbildung einbezogen werden können. Bei der Verwendung des Verfahrens zur Überprüfung von Strukturglas ist ein für die Mittelwertbildung verwendeter Ausschnitt des Messbilds daher vorteilhafterweise größer als Abmessungen von Strukturen in der Oberfläche des Flachglas-Substrats. Werden beispielsweise pyramidenartige Strukturen in die Oberfläche eingebracht, sollten die Ausschnitte für die Mittelwertbildung größer als die Ausdehnung der Einzelstrukturen sein. Durch eine geeignete Bildbearbeitung können so Ablenkungen des Lichts durch die Strukturen berücksichtigt werden. Die Erfindung ermöglicht es so insbesondere, auch den Transmissionsgrad von Strukturglas mit einer hinreichenden Genauigkeit zu überprüfen. Auch hierbei ist es von besonderem Vorteil, dass besser zwischen verringerten Transmissionsgraden aufgrund von Strukturen in der Oberfläche und verringerten Transmissionsgraden aufgrund von Verunreinigungen im Glas unterschieden werden kann.

Das Verfahren ist dabei universell einsetzbar für alle Flachglasherstellungsverfahren, Flachglastypen und Flachglasanwendungen. Insbesondere eignet es sich zur Überprüfung des Transmissionsgrads von Strukturglas. Der ermittelte Transmissionsgrad von Floatglas sollte insbesondere für die Solarglas-Produktion bei ≥ 90% liegen. Durch Oberflächenstrukturierung und Beschichtung erreicht man eine Verbesserung um jeweils bis zu 3%. Da die Angaben i.d.R. auf 0,1% genau erfolgen, sollte die angestrebte Messgenauigkeit ≤ 0,1% sein.

Der Fokus der Erfindung liegt dabei insbesondere auf der Qualitätssicherung, d.h. das System zielt in erster Linie darauf ab, eine gleichbleibende Qualität zu sichern. Für die Qualitätssicherung werden schwerpunktmäßig Verunreinigungen im Glas lokalisiert, welche aufgrund von Absorption eine Reduzierung des Transmissionsgrads bewirken. Eine erste Messung mit polychromatischem Licht kann insbesondere mit Weißlicht stattfinden, während weitere Messungen mit monochromatischen Lichtquellen realisiert werden. Als Wellenlängen für die monochromatischen Lichtquellen werden erfindungsgemäß diejenigen gewählt, welche von potentiellen Verunreinigungen im Glas selektiv absorbiert werden. Die Empfängereinheit wird dann auf die gewählten Wellenlängen abgestimmt.

Dabei kann eine Bestimmung eines Absolutwerts für den Transmissionsgrad durchgeführt werden. Für eine Qualitätssicherung kann es jedoch auch ausreichend sein, lediglich die Abweichung der Transmission von einem Sollwert zu bestimmen und so den Transmissionsgrad zu überprüfen. In einer Ausführungsform der Erfindung erfolgt somit eine Überprüfung des Transmissionsgrads durch einen Vergleich eines durch die Messvorrichtung ermittelten Transmissionsgrads mit einem Soll-Transmissionsgrad. Im Wesentlichen wird dann ein Soll-Ist-Vergleich des Transmissionsgrads vorgenommen.

Beim Vergleich der Transmissionsgrade mehrerer Messungen müssen somit nicht zwingend Absolutwerte von Transmissionsgraden miteinander verglichen werden, sondern auch hierbei können die jeweiligen Abweichungen der gemessenen Transmissionsgrade von einem Sollwert miteinander verglichen werden. Auch dies ist von der Erfindung umfasst.

Das Verfahren kann mit einer stationären Messvorrichtung durchgeführt werden, in welche ein Flachglas-Substrat temporär eingebracht wird. Bei entsprechender Ausdehnung der Lichtquelle und einer Empfängereinheit beispielsweise mit einer Vielzahl von Empfängern kann so der Transmissionsgrad innerhalb eines größeren Bereichs eines Flachglas-Substrats überprüft werden. In einer bevorzugten Ausführungsform der Erfindung werden das Flachglas-Substrat und die Messvorrichtung jedoch kontinuierlich so in Relation zueinander bewegt, dass die Empfängereinheit im Laufe dieser Bewegung den Lichtdurchtritt durch unterschiedliche Teilbereiche des Flachglas-Substrats erfasst. Auf diese Weise kann ein Flachglas-Substrat vollständig geprüft werden, wenn eine beweglich ausgeführte Messvorrichtung beispielsweise die gesamte Fläche eines Substrats abscannt. Um bewegliche Komponenten einer Messvorrichtung zu vermeiden, hat es sich jedoch als vorteilhaft erwiesen, wenn diese im Wesentlichen stationär ist und das Flachglas-Substrat gegenüber der Messvorrichtung bewegt wird, um so ebenfalls die gesamte Fläche eines Substrats zu scannen.

Um das Verfahren vorteilhaft in den Produktionsprozess der Flachglasherstellung zu integrieren, ist in einer Ausführungsform der Erfindung insbesondere vorgesehen, dass die Messvorrichtung ortsfest ist, während das Flachglas-Substrat kontinuierlich zwischen der Lichtquelle und der Empfängereinheit hindurch bewegt wird. Die Messvorrichtung kann dabei als eine Art Portal ausgeführt sein, durch welches eine kontinuierlich erzeugte Glasbahn fortlaufend zwischen der Lichtquelle und der Empfängereinheit geführt wird.

Die mehreren Messungen mit unterschiedlichem Licht erfolgen dann vorzugsweise möglichst parallel, beziehungsweise so kurz hintereinander, dass dennoch eine kontinuierliche Inlineprüfung möglich ist.

Vorzugsweise hat das Flachglas-Substrat quer zur Richtung der Relativbewegung zwischen der Messvorrichtung und dem Flachglas-Substrat eine Ausdehnung der Breite B, wobei die Lichtquelle das Flachglas-Substrat über die gesamte Breite B durchstrahlt. Eine entsprechend ausgebildete Empfängereinheit kann dann Licht erfassen, welches durch einen Streifen durch das Flachglas-Substrat hindurchtritt, der sich über die gesamte Breite B des Flachglas-Substrats erstreckt. So kann eine Art Linien-Scan durchgeführt werden, wodurch bei einem fortlaufend durch die Messvorrichtung bewegten Flachglas-Substrat kontinuierlich eine vollflächige Überprüfung einer Glasbahn erfolgen kann.

Insbesondere weist die Empfängereinheit hierzu mehrere Empfänger (Kameras) auf, die zur Erfassung von Licht der Lichtquelle ausgebildet sind und deren Messbilder durch eine Bildverarbeitungseinheit zu einem Abbild eines flächigen Bereiches des Flachglas-Substrats zusammen gefügt werden. So kann eine größere Teilfläche des Flachglas-Substrats überprüft werden. Für einen Linien-Scan sind die Empfänger der Empfängereinheit beispielsweise nebeneinander angeordnet und ihre Messbilder werden zu einem Abbild eines Streifens des Flachglas-Substrats zusammen gefügt, der sich über die gesamte Breite B erstreckt.

In jedem Fall ist es dabei vorteilhaft, wenn sich die Messbilder der Empfänger bereichsweise überlappen. Hierdurch lässt sich die Genauigkeit der Ermittlung des Transmissionsgrads erhöhen, wenn beispielsweise Helligkeitswerte ein und desselben Punktes in zwei überlappenden Bildern miteinander verglichen und so möglichst verifiziert werden. Bei abweichenden Helligkeitswerten für einen Punkt kann ebenfalls eine Mittelwertbildung durchgeführt werden. Die überlappenden Messbilder können ferner für eine Selbstkalibrierung des Messsystems mit mehreren Empfängern verwendet werden.

Insgesamt ermöglicht es die Erfindung, Ursachen für verringerte Transmissionsgrade innerhalb eines Flachglas-Substrats besser einzuschätzen und somit geeigneter auf diese reagieren zu können. Insbesondere ist es mit verschiedenen vorteilhaften Ausführungsformen der Erfindung möglich, die Transmission direkt im Produktionsprozess zu messen und damit auch unmittelbar in den laufenden Herstellungsprozess einzugreifen. Eine genauere Fehlereinschätzung ermöglicht dabei ein gezielteres Eingreifen in den Herstellungsprozess, da zum Beispiel die Beimischungen zum Glas nicht überprüft und/oder angepasst werden müssten, wenn die Prüfung mit dem erfindungsgemäßen Verfahren ergibt, dass ein verringerter Transmissionsgrad voraussichtlich nicht durch eine Verunreinigung verursacht ist. Statt dessen können Prüfungen und/oder Gegenmaßnahmen eingeleitet werden, welche beispielsweise die Einstellung der Dicke oder die Beschaffenheit der Oberfläche des Glases betreffen.

Das Verfahren ermöglicht so die Einhaltung der hohen Anforderungen an beispielsweise Solarglas bereits in der Produktion. Durch eine kontinuierliche Transmissionsmessung und eine anschließende Kategorisierung von Transmissionsgraden wird die Ausschussquote bei beschichtetem Glas, sowie in der Folge bei Photovoltaik- und Kollektormodulen, nachhaltig reduziert. Ein wichtiger ökologischer und ökonomischer Vorteil ist es somit, dass der Ausschuss in der Produktion und in der Weiterverarbeitung (Beschichtung oder beim Erstellen von Verbundglas) deutlich reduziert werden kann. Daraus resultiert eine erhebliche Einsparung bei den Ausschusskosten und Entsorgungskosten.

Dabei ist ein Einsatz unter Produktionsbedingungen möglich, was insbesondere hohe Temperaturen und Fremdlicht (z.B. Beleuchtung, Flurförderfahrzeuge) beinhaltet. Durch die Verwendung von moduliertem Licht können Fremdlichteinflüsse beispielsweise eliminiert werden.

In einer Ausführungsform der Erfindung ist ferner vorgesehen, dass Licht der Lichtquelle in wenigstens einem Bereich neben dem Flachglas-Substrat ohne Durchtritt durch das Flachglas-Substrat von der Empfängereinheit erfasst wird. Dazu kann die Lichtquelle breiter ausgeführt sein als das zu prüfende Flachglas-Substrat, so dass auch Bereiche beispielsweise links und rechts einer Glasbahn beleuchtet werden. Die Empfängereinheit ist dann so ausgebildet, dass sie auch dieses Licht erfassen kann. Hierdurch kann im Randbereich des Flachglas-Substrats eine Nullmessung ohne Medium durchgeführt werden, was einer Transmission von 100% entspricht. Diese Nullmessung gibt Veränderungen in den äußeren Gegebenheiten wieder, die beim fortlaufenden Betrieb der Messvorrichtung entstehen können und die bei einer Kalibrierung berücksichtigt werden müssen. Das von der Empfängereinheit ohne Durchtritt durch das Flachglas-Substrat erfasste Licht der Lichtquelle kann daher insbesondere als Referenzwert für die Kalibrierung der Messvorrichtung verwendet werden.

Vorzugsweise erfolgt die Kalibrierung in Form einer Selbstkalibrierung des Systems. In einer Ausführungsform der Erfindung kann dies auch kontinuierlich während der Überprüfung des Transmissionsgrads erfolgen, da die Nullmessung neben dem Substrat fortlaufend durchgeführt werden kann. So muss der Produktionsprozess einer Glasbahn nicht unterbrochen werden, sondern das System kalibriert sich fortlaufend selbstständig. Dazu kann beispielsweise das Messbild wenigstens eines äußeren Empfängers verwendet werden, welches einen Randbereich des Flachglas-Substrats wiedergibt, aber gleichzeitig auch einen Bereich neben dem Flachglas-Substrat abdeckt, in dem Licht von der Lichtquelle ohne Glasdurchtritt auf den Empfänger trifft. Diesem äußeren Empfänger steht somit aus einer Nullmessung ein Referenzwert mit einem definierten Kalibrierwert für eine Transmission von 100% zur Verfügung, mit dem dieser Empfänger kalibriert werden kann. Das Gleiche gilt für einen zweiten, gegenüber liegenden äußeren Empfänger am anderen Rand der Glasbahn, der so ebenfalls kalibriert werden kann. Ausgehend von diesen beiden äußeren Empfängern kann das Messsystem von weiter innen liegenden Empfängern dann in einem Step-by-Step-Abgleich mit dem jeweils benachbarten Messsystem kalibriert werden. Für diesen Abgleich ist die bereits erwähnte Überlappung der Messbilder der einzelnen Empfänger von Vorteil. So verfügt jeder Empfänger für einen Überlappungsbereich ergänzend zu den eigenen Daten auch über Daten von wenigstens einer benachbarten Kamera, welche für einen Abgleich und eine Kalibrierung verwendet werden können. In jeden Abgleich kann so Schritt für Schritt der Referenzwert einfließen, der durch eine der beiden äußeren Empfänger bei einer Nullmessung ermittelt wurde. Auf diese Weise kann eine geeignete Selbstkalibrierung des Systems realisiert werden, was die Messeinrichtung insbesondere für den Einsatz direkt im Produktionsprozess mit schwankenden und extremen Umgebungseinflüssen einsetzbar macht.

Von der Erfindung umfasst ist auch eine zugehörige Vorrichtung zur Überprüfung des Transmissionsgrads eines Flachglas-Substrats gemäß Anspruch 14, umfassend eine Messvorrichtung, mit der Licht wenigstens einer Lichtquelle von einer Seite des Flachglas-Substrats durch das Flachglas-Substrat hindurch auf die gegenüber liegende Seite des Flachglas-Substrats geleitet werden kann, wo es durch wenigstens eine Empfängereinheit erfasst wird. Die Vorrichtung weist eine Datenverarbeitungseinheit in Verbindung mit der Lichtquelle und der Empfängereinheit auf, welche dazu ausgebildet ist, anhand eines Vergleichs zwischen der Intensität des von der Lichtquelle ausgesandten Lichts und des auf die Empfängereinheit fallenden Lichts den Transmissionsgrad des Flachglas-Substrats zu bestimmen.

Erfindungsgemäß umfasst die Vorrichtung eine Lichtquelle, mit der polychromatisches Licht erzeugbar ist, und die Datenverarbeitungseinheit umfasst Mittel zur Bestimmung des Transmissionsgrads an einer Stelle des Flachglas-Substrats anhand dieses polychromatischen Lichts, das von einer Empfängereinheit registriert wird. Ferner umfasst die Vorrichtung eine Lichtquelle, mit der monochromatisches Licht erzeugbar ist, und die Datenverarbeitungseinheit weist Mittel zur Bestimmung des Transmissionsgrads an der gleichen Stelle des Flachglas-Substrats anhand dieses monochromatischen Lichts auf, das von einer Empfängereinheit registriert wird. Dabei ist die Datenverarbeitungseinheit ferner zur Durchführung eines Vergleichs der in den wenigstens zwei Messungen bestimmten Transmissionsgraden ausgebildet.

Für die wenigstens zwei Messungen können unterschiedliche Lichtquellen und Empfängereinheiten vorgesehen sein. Vorteilhaft ist es jedoch, wenn die Messungen mit einem jeweils vergleichbaren Messaufbau durchgeführt werden. In einer bevorzugten Ausführungsform der Erfindung weist die verwendete Messvorrichtung daher eine Empfängereinheit und eine Lichtquelle auf, deren Strahlung variierbar ist. So kann mit einer Lichtquelle sowohl polychromatisches als auch monochromatisches Licht erzeugt werden.

Dabei ist die Lichtquelle in einer vorteilhaften Ausführungsform der Erfindung eine flächenhafte diffuse Lichtquelle und die Empfängereinheit umfasst wenigstens einen ortsauflösenden Empfänger, zwischen denen das Flachglas-Substrat positionierbar ist. Die Datenverarbeitungseinheit ist ferner dazu ausgebildet, durch eine Auswertung von Helligkeitswerten im Messbild des ortsauflösenden Empfängers den Transmissionsgrad ortsaufgelöst in einer Teilfläche des Flachglas-Substrats zu ermitteln, welche vom Messbild abgedeckt wird.

Vorzugsweise weist die Vorrichtung Mittel zur kontinuierlichen Bewegung des Flachglas-Substrats und der Messvorrichtung in Relation zueinander auf, wobei mit der Empfängereinheit im Laufe dieser Bewegung der Lichtdurchtritt durch unterschiedliche Teilbereiche des Flachglas-Substrats erfassbar ist. Somit ist die Vorrichtung dazu ausgebildet, den Transmissionsgrad innerhalb einer größeren Fläche des Flachglas-Substrats zu prüfen. Beispielsweise kann die Messvorrichtung dabei ortsfest sein, während das Flachglas-Substrat kontinuierlich zwischen der Lichtquelle und der Empfängereinheit hindurch bewegt wird. Wie zuvor bereits erläutert, kann die Messeinrichtung so insbesondere in einen Produktionsprozess integriert sein, wobei eine kontinuierlich hergestellte Glasbahn in einem Endlosband durch die Messeinrichtung hindurch läuft.

Die Abmessungen der Vorrichtung sind dabei vorzugsweise so gewählt, dass das Flachglas-Substrat quer zur Richtung der Relativbewegung zwischen der Messvorrichtung und dem Flachglas-Substrat eine Ausdehnung der Breite B hat, die geringer ist als die Breite b der Lichtquelle in derselben Richtung. Typische Breiten für Flachglas-Substrate liegen in der Größenordnung von etwa 3,5 bis 4 m und die Lichtquelle kann diese beispielsweise auf zwei gegenüber liegenden Seiten um 10 cm überragen.

Um einen Linienscan durchzuführen, weist die Empfängereinheit vorzugsweise mehrere nebeneinander angeordnete ortsauflösende Empfänger wie Kameras auf. Die Datenverarbeitungseinheit ist dann zur Zusammenfügung der Messbilder der Empfänger zu einem größeren Abbild eines flächigen Bereiches des Flachglas-Substrats ausgebildet. Ferner ist die Datenverarbeitungseinheit für die zuvor erwähnte Kalibrierung der Messvorrichtung anhand von der Empfängereinheit ohne Durchtritt durch das Flachglas-Substrat erfassten Lichts der Lichtquelle in einem Bereich neben dem Flachglas-Substrat ausgebildet. Die Vorrichtung und insbesondere die Datenverarbeitungseinheit sind somit insgesamt zur Durchführung einer oder mehrerer Ausführungsformen des erfindungsgemäßen Verfahrens ausgebildet.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Abbildungen.

Von den Abbildungen zeigt:
- Fig. 1: eine schematische Darstellung der Komponenten eines Systems mit einer Messvorrichtung zur Durchführung des erfindungsgemäßen Verfahrens; und
- Fig. 2: einen schematischen Querschnitt durch eine Lichtquelle, ein Flachglas-Substrat und eine Empfängereinheit.

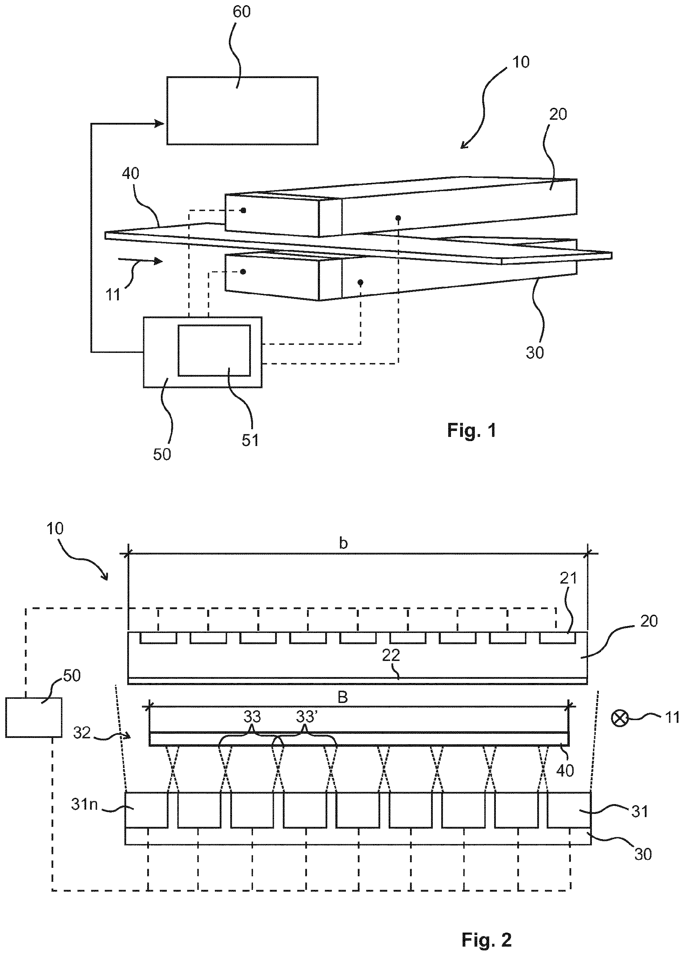

Die Erfindung verwendet das Prinzip der quantitativen Messung des Transmissionsgrads als Verhältnis der Intensität eines Lichtstrahls nach dem Durchgang durch das zu vermessende Medium zu der des auftreffenden Lichtstrahls. Hierfür ist es notwendig, in einer Messvorrichtung die Intensität vor und nach Hindernisdurchgang zu kennen bzw. zu messen. Die wesentlichen Komponenten eines Ausführungsbeispiels eines Systems mit einer solchen Messvorrichtung werden im Folgenden anhand der schematischen Darstellungen der Figuren 1 und 2 erläutert.

Die Erfindung ist jedoch nicht auf ein solches Messverfahren beschränkt, sondern der Transmissionsgrad kann für den erfindungsgemäßen Vergleich zwischen mehreren Messungen auch mit anderen Messverfahren bestimmt werden. Insbesondere können auch ein oder mehrere Punktmessungen eingesetzt werden.

Die Messvorrichtung 10 des Ausführungsbeispiels der Fig. 1 umfasst eine flächenhafte diffuse Lichtquelle 20. Diese kann beispielsweise durch ein LED-Panel mit einer Vielzahl von Leuchtdioden 21 unter einem lichtdurchlässigen, plattenförmigen Diffusor 22 gebildet werden (siehe auch Fig. 2). Der Diffusor 22 kann beispielsweise als Folie ausgeführt sein. Ein solches Panel besteht im Wesentlichen aus einer Leiterplatte, auf der in einem zweidimensionalen Array Leuchtdioden (LEDs) beispielsweise vom SMD-Typ montiert sind. Bei den LEDs handelt es sich einerseits um Weißlichtdioden. Eine Weißlicht-LED kann beispielsweise durch eine blaue LED mit einer Konversationsschicht realisiert werden, die auf Phosphoreszenz beruht. Durch diese Weißlichtdioden lässt sich mit der Lichtquelle 20 polychromatisches Licht für eine erste Messung des Transmissionsgrads erzeugen.

Die Weißlichtdioden werden ergänzt durch LEDs, die monochromatisches Licht unterschiedlicher Wellenlängen erzeugen. So können auf dem gleichen Panel beispielsweise gelbe, grüne, rote und/oder blaue LEDs angebracht sein. Die Auswahl der Wellenlängen der LEDs hängt dabei insbesondere davon ab, welcher Spektralbereich zum Nachweis einer potentiellen Verunreinigung für relevant gehalten wird.

Die LEDs sind innerhalb einer solchen als Lichtmatrix bzw. Leuchtmatrix ausgebildeten Leuchtwand 20 beispielsweise in gleichmäßigen Reihen angeordnet. Die Leuchtdioden können jedoch auch versetzt zueinander oder in anderen speziellen Mustern angeordnet sein. Insbesondere hat sich eine Anordnung in hexagonalen Gittern als zweckmäßig erwiesen. Der Abstand zwischen den einzelnen LEDs kann zweckmä-βigerweise in der Größenordnung von 1 bis 4 cm, insbesondere bei etwa 2 cm liegen. Beispielsweise kann ein LED-Panel dabei etwa 1000 LEDs umfassen.

Vorzugsweise ist jede LED einzeln ansteuerbar, oder Gruppen von LEDs sind getrennt voneinander ansteuerbar. Mit dem LED-Panel lässt somit zeitlich versetzt sowohl Weißlicht als auch monochromatisches Licht unterschiedlicher Wellenlängen erzeugen. Die Intensität der Lichtquelle 20 ist vorzugsweise flexibel einstellbar, was beispielsweise über eine hardware-basierte Stromreglung der LEDs erfolgen kann. Vorteilhafterweise wird jedoch eine software-basierte Pulsweitenmodulation eingesetzt (PWM-Regelung).

Die so ausgebildete flächenhafte Lichtquelle 20 ist beispielsweise oberhalb eines Flachglas-Substrats 40 angeordnet, so dass das Glas von oben homogen beleuchtet wird. Unterhalb des Flachglas-Substrats 40 befindet sich als weiterer Teil der Messvorrichtung 10 eine Empfängereinheit 30, die wenigstens einen ortsauflösenden Empfänger in Form beispielsweise einer Kamera umfasst. Die Anordnung kann jedoch auch umgekehrt sein, so dass sich die Lichtquelle 20 unterhalb und die Empfängereinheit 30 oberhalb des Flachglas-Substrats 40 befindet.

Vorzugsweise sind mehrere Kameras 31,..., 31n nebeneinander angeordnet, wie es auch dem Querschnitt der Fig. 2 zu entnehmen ist. Das Flachglas-Substrat 40 hat dabei eine Ausdehnung der Breite B. Durch eine Empfängereinheit 30 mit mehreren nebeneinander angeordneten Kameras 31, ..., 31n kann aus den Bildern dieser Kameras ein streifenförmiges Abbild des Flachglas-Substrats 40 über seine gesamte Breite B erstellt werden. Die Empfängereinheit 30 ist somit so breit bzw. weist so viele nebeneinander angeordnete Empfänger auf, dass das Substrat 40 in seiner gesamten Breite B erfassbar ist. Die Lichtquelle 20 ist entsprechend ebenfalls so ausgestaltet, dass sie die gesamte Breite B des Flachglas-Substrats 40 gleichmäßig durchstrahlen kann. So kann ein Linienscan des Substrats 40 über seine gesamte Breite B erzeugt werden, indem der Transmissionsgrad in einem Streifen geprüft wird, der sich über die gesamte Breite des Flachglas-Substrats erstreckt. Vorzugsweise überlappen sich dabei die Messbilder in der Ebene des Substrats, welche durch jeweils eine Kamera erfassbar sind. Fig. 2 zeigt exemplarisch zwei überlappende Bereiche/Messbilder 33 und 33' von zwei nebeneinander liegenden Kameras.

Bei dem Substrat 40 handelt es sich beispielsweise um eine Glasbahn, die sich in Richtung des Pfeils 11 durch die Messvorrichtung 10 hindurch bewegt. Die Messvorrichtung 10 mit der Lichtquelle 20 und der Empfängereinheit 30 ist somit in diesem Ausführungsbeispiel stationär, während sich die zu überprüfende Glasbahn 40 in Relation zur Messvorrichtung 10 bewegt. Das Glas ist dabei noch nicht in Glasplatten geschnitten, sondern es handelt sich um eine kontinuierlich erzeugte und durch die Messvorrichtung 10 laufende Endlosbahn, wie sie typischerweise in Floatglas- oder Strukturglasanlagen erzeugt wird. Die Erfindung kann jedoch auch bei bereits zugeschnittenen Glasscheiben oder anderen Arten von Flachglas-Substraten eingesetzt werden.

Die Messvorrichtung 10 kann dabei auch beweglich ausgeführt sein und beispielsweise über verschiedene Bereiche eines Flachglas-Substrats bewegt werden, welche dann stationär ist oder gleichzeitig ebenfalls bewegt wird. Die Messvorrichtung 10 kann sowohl in der stationären als auch in der beweglichen Variante in Form eines Portals mit einer Ober- und einer Unterseite ausgeführt sein, zwischen denen das zu prüfende Flachglas-Substrat positioniert werden kann.

Die Lichtquelle 20 wird gepulst betrieben, wobei die Kameras der Empfängereinheit 30 mit diesem quasi stroboskopischen Betrieb synchronisiert sind. Die Blitzrate der Lichtquelle 20 liegt dabei beispielsweise im Bereich einiger 10 bis 100 Hertz und die Blitzdauer im Bereich von Mikrosekunden. Typischerweise sind die Verschlusszeiten der Kameras länger als die Blitzdauer der Lichtquelle. Dabei wird die Variation des Lichts beim gepulsten Betrieb der Lichtquelle und deren Synchronisation mit den Kameras berücksichtigt.

Wenigstens für diese Synchronisierung, den Vergleich von ausgesandter zur empfangener Lichtintensität, für die Ermittlung des Transmissionsgrads und für einen Vergleich von Transmissionsgraden mehrerer Messungen stehen die Lichtquelle 20 und die Empfängereinheit 30 in Verbindung mit einer Datenverarbeitungseinheit 50. Die Datenverarbeitungseinheit 50 ist insbesondere dazu ausgebildet, anhand der Intensität des Lichts der Lichtquelle 20 und Helligkeitswerten für das von den ortsauflösenden Empfängern 31, ..., 31n empfangenen Lichts den Transmissionsgrad einer Teilfläche der Glasbahn ortsaufgelöst zu ermitteln und vorzugsweise auch anhand eines Sollwerts zu überprüfen. Ferner ist sie dazu ausgebildet, gemessene Transmissionsgrade bzw. Abweichungen zwischen gemessenen Transmissionsgraden und einem Sollwert mit einander zu vergleichen und anhand der zuvor beschriebenen Kriterien in verschiedene Kategorien einzuteilen.

Die Datenverarbeitungseinheit 50 umfasst ferner eine Bildverarbeitungseinheit 51, welche vorzugsweise aus den Bildern der Kameras ein Abbild einer erfassten Teilfläche des Flachglas-Substrats erstellen kann. Die Bildverarbeitungseinheit 51 umfasst ferner Mittel zur Durchführung einer Bildbearbeitung anhand der Messbilder der einzelnen Empfänger der Empfängereinheit. Um die Genauigkeit bei der Ermittlung des Transmissionsgrads zu erhöhen, ist vorzugsweise vorgesehen, dass im Messbild des ortsauflösenden Empfängers eine Bildbearbeitung durchgeführt wird. Die Ermittlung des Transmissionsgrads erfolgt dann anhand der Helligkeitswerte nach der Bildbearbeitung des Messbilds. Die Bildbearbeitung kann dabei insbesondere eine Mittelwertbildung für Helligkeitswerte über mehrere Punkte wenigstens eines Ausschnitts des Messbilds beinhalten. Bei der Verwendung einer flächenhaften diffusen Lichtquelle kommt es zu einer Überlagerung einer Vielzahl von Punktquellen und damit zu einem eher statistischen Messwert, der durch die Überlagerung der verschiedenen Punktquellen und Durchgänge durch das Glas entsteht. Dieser Messwert sollte im Mittel überall gleich sein.

Die Datenverarbeitungseinheit 50 kann wiederum in Verbindung mit einer Steuereinheit 60 für den Produktionsprozess stehen, innerhalb dessen das Flachglas-Substrat produziert wird. Bei Abweichungen des Transmissionsgrads des Substrats von einem Sollwert kann dies von der Datenverarbeitungseinheit 50 an die Steuereinheit 60 gemeldet werden, welche daraufhin das Substrat als untauglich registrieren und/oder Parameter des Produktionsprozesses ändern kann, um den Transmissionsgrad in den gewünschten Bereich zu bringen. Insbesondere kann die Datenverarbeitungseinheit 50 der Steuereinheit 60 Informationen darüber übermitteln, welche Art von Fehler innerhalb eines Glases voraussichtlich zu einem verringerten Transmissionsgrad geführt hat, so dass die Steuereinheit 60 daran angepasste Maßnahmen einleiten kann.

Dabei übersteigt die Breite b der Lichtquelle 20 vorzugsweise die Breite B des Flachglas-Substrats 40. Das Gleiche gilt für die Breite der Empfängereinheit 30 bzw. den maximalen Bereich, der durch die Kameras der Empfängereinheit 30 abgebildet werden kann. In diesem Fall liegt, wie in Fig. 2 erkennbar, neben der Glasbahn 40 links und rechts jeweils ein äußerer Bereich 32 vor, innerhalb dessen Licht der Lichtquelle 20 ohne Durchtritt durch das Substrat 40 auf eine äußere Kamera 31n der Empfängereinheit 30 treffen kann. Diese Bereiche ohne Lichtdurchtritt durch das Flachglas-Substrat können als Nullmessung für eine Kalibrierung der Messvorrichtung 10 genutzt werden.

Der geeignete Abstand zwischen dem LED-Panel 20 und dem plattenförmigen Diffusor 22 hängt stark vom gewählten Diffusortyp und seinen Eigenschaften ab. Er kann beispielsweise in der Größenordnung von 5 bis 20 cm, insbesondere bei etwa 10 cm liegen. Als Abstand zwischen dem Diffusor und dem Flachglas-Substrat haben sich 15 bis 45 cm, insbesondere etwa 30 cm als vorteilhaft erwiesen, während der Abstand zwischen der Empfängereinheit und dem Flachglas-Substrat als Gegenstandsweite in der Größenordnung von 70 bis 150 cm, insbesondere bei etwa 110cm liegen kann. Dieser Abstand ist stark vom Kamerasensor und Objektiv der Kamera abhängig. Die Abstände zwischen dem Flachglas-Substrat und den Komponenten der Messvorrichtung sind ferner relevant, wenn eine Messung am noch warmen Substrat vorgesehen ist, insbesondere sogar im laufenden Produktionsprozess. Somit ist die Messvorrichtung einem Glasband gegenüber liegend angeordnet, das mindestens 40 bis 45°C heiß ist. Seine Temperatur kann jedoch auch deutlich über 100°C liegen. Die Hardware muss an diese Gegebenheiten angepasst sein.

Neben der geschilderten Hardware umfasst die Erfindung auch die zugehörige Software. Diese setzt sich hauptsächlich zusammen aus Software für die Steuerung der Lichtquellen und -empfänger, Software zum Auswerten der ermittelten Daten und einem angepassten Kalibrieralgorithmus. Die Datenverarbeitungseinheit 50 verarbeitet die Messdaten und kann die entsprechenden Informationen beispielsweise an die Steuerung 60 der Produktionsanlage bzw. die Qualitätssicherung weitergeben. Dabei ist das Echtzeitverhalten des Systems von besonderer Bedeutung und die beim Einsatz von Kameras anfallenden hohen Datenraten müssen optimiert werden. Die sehr umfangreiche Datenmenge, die von den Kameras erfasst wird, kann beispielsweise durch Vorauswertung reduziert werden. Dies ermöglicht es insbesondere, die zur Verfügung stehenden Messdaten über Standardschnittstellen (LAN, WLAN, CAN-Bus etc.) zu weiterverarbeitenden Systemen übertragen zu können, ohne dass Bandbreiten-Probleme auftreten.

Das grundsätzliche Messverfahren, das für die Bestimmung bzw. Prüfung des Transmissionsgrads des Flachglas-Substrats 40 verwendet werden kann, beruht auf der bekannten Wellenlänge des Lichts der Lichtquelle 20 und dem bekannten Spektrum des Flachglas-Substrats. Die Glasbahn 40 stellt ein Hindernis für die Ausbreitung des Lichts der Lichtquelle 20 dar. Der Transmissionsgrad ***τ*** beschreibt den Anteil des durchgelassenen Lichtstroms zum auftreffenden Lichtstrom, der von einer Kamera der Empfängereinheit 30 erfasst wird. Wenn ***I₀*** die Intensität des auftreffenden Lichts ist und ***Iₚ*** die Intensität des Lichts hinter der Glasbahn, dann ist τ = Iₚ/I₀. Die Verluste entstehen durch Reflexion an der Oberfläche und Absorption beim Durchlaufen der Glasbahn.

Unter Berücksichtigung des Sonnenspektrums und der spektralen Charakteristiken der verschiedenen Solarzelltypen werden entsprechende repräsentative Wellenlängen definiert und mit den LEDs der Lichtquelle 20 realisiert. Die Empfangseinheit 30 wird dann auf diese Wellenlängen abgestimmt. Die Bildwiederholrate wird dabei für eine quasi-kontinuierliche Messung in Abhängigkeit von der Fließgeschwindigkeit der Glasbahn ermittelt.

Neben einer homogenen flächigen Ausleuchtung der Glasbahn durch die flächenhafte Lichtquelle 20 besteht ferner die Möglichkeit, durch Einzelansteuerung der LEDs Prüfmuster zu erzeugen. So kann die Vorrichtung auch hinsichtlich einer Defekterkennung erweitert werden. Zusammen mit der gezielten Triggerung von Kameraaufnahmen lassen sich dann unterschiedliche Messungen quasi-simultan durchführen. Über Hardware-Trigger können kurze Lichtblitze mit den unterschiedlichsten Eigenschaften erzeugt werden. Als Beispiel seien hier erwähnt: Eine homogene Ausleuchtung, Muster, die einzelne LEDs betonen oder Grauverläufe, die durch die unterschiedliche Blitzlänge der einzelnen LEDs entstehen.

Für eine genaue und reproduzierbare Messung ist ein kalibriertes Messsystem eine wesentliche Voraussetzung. Vorzugsweise wird daher ein Kalibrierverfahren verwendet, welches in das Inline-Messverfahren integriert werden kann, da es sich in der Flachglasproduktion um einen unterbrechungsfreien kontinuierlichen Prozess handelt. Der Prozess kann somit nicht für eine Kalibrierung der Messvorrichtung unterbrochen werden. Mit einer Intensitätsregelung der LED-Strahler durch PWM statt herkömmlicher Stromregelung steht dabei ein Mittel zur Verfügung, die Helligkeit der Lichtquelle 20 bei Bedarf beliebig einstellen und nachregeln zu können. Darüber hinaus können mit PWM alterungsbedingte Reduzierungen der Licht-Intensität LEDindividuell im Online-Kalibrierverfahren kompensiert und damit ein hohes Maß an Langzeitstabilität der Lichtquelle gewährleistet werden.

Bei einer typischen Bahnbreite B von 3,5 bis 4 Metern und Messequipment sowohl auf Ober- und Unterseite ist es nur schwer möglich, die Messgeräte in einem Offline-Prozess zu kalibrieren, weil dies mit einem erheblichen Umbau-Aufwand verbunden ist. Für einen automatisierten Kalibrierprozess wären hingegen bewegliche Teile notwendig, welche ebenfalls nachteilig wären.

Vorteilhaft ist daher in einer Ausführungsform ein Ansatz für eine Kalibrierung, der ohne bewegliche Teile auskommt. Dabei werden alle eingesetzten Lichtquellen und Kameras durch überlappende Aufnahmebereiche in einem Step-by-Step-Abgleich mit dem Nachbarsystem kalibriert, wobei die jeweils äußeren Kameras aufgrund von Nullmessungen neben der Glasbahn Referenzwerte mit definierten Kalibrierwerten zu Verfügung haben. So kann sowohl ein Abgleich mit einem Referenzsystem erfolgen als auch die Güte der Kalibrierung beurteilt werden. Mit den beidseitigen Referenzsystemen kann eine Fehlkalibrierung, die durch momentane Änderungen in den Glaseigenschaften entstehen könnte, ausgeschlossen werden.

### Bezugszeichenliste:

- 10: Messvorrichtung
- 11: Richtung des Relativbewegung, Bewegungsrichtung Glasbahn
- 20: Lichtquelle, Leuchtwand, LED-Panel
- 21: Lichtquelle, Leuchtdiode, LED
- 22: Diffusor
- 30: Empfängereinheit
- 31,31n: Empfänger, Kamera
- 32: Äußerer Messbereich
- 33,33': Messbild
- 40: Flachglas-Substrat, Glasbahn
- 50: Datenverarbeitungseinheit
- 51: Bildverarbeitungseinheit
- 60: Steuerungseinheit einer Produktionsanlage

## Patentansprüche

1. Verfahren zur Überprüfung des Transmissionsgrads eines Flachglas-Substrats (40) mit einer Messvorrichtung (10), mit der Licht wenigstens einer Lichtquelle (20) von einer Seite des Flachglas-Substrats (40) durch das Flachglas-Substrat (40) hindurch auf die gegenüber liegende Seite des Flachglas-Substrats (40) geleitet wird, wo es durch wenigstens eine Empfängereinheit (30) erfasst wird und anhand eines Vergleichs zwischen der Intensität des von der Lichtquelle (20) ausgesandten Lichts und des auf die Empfängereinheit (30) fallenden Lichts der Transmissionsgrad des Flachglas-Substrats (40) bestimmt wird, wobei eine Lichtquelle (20) der wenigstens einen Lichtquelle in einer ersten Messung polychromatisches Licht erzeugt, wobei der Transmissionsgrad an wenigstens einer Stelle des Flachglas-Substrats (40) anhand des polychromatischen Lichts bestimmt wird, das von einer Empfängereinheit (30) der wenigstens einen Empfängereinheit registriert wird, **dadurch gekennzeichnet, dass** eine Lichtquelle (20) der wenigstens einen Lichtquelle in wenigstens einer weiteren Messung monochromatisches Licht einer definierten Wellenlänge erzeugt, die derart gewählt ist, dass das monochromatische Licht von potentiellen Verunreinigungen im Flachglas-Substrat (40) absorbiert wird, wobei der Transmissionsgrad des Flachglas-Substrats (40) ebenfalls anhand des monochromatischen Lichts ermittelt wird, das von einer Empfängereinheit (30) der wenigstens einen Empfängereinheit registriert wird, und durch einen Vergleich der ersten Messung und der wenigstens einen weiteren Messung ermittelt wird, ob der Transmissionsgrad bei der ersten und bei der wenigstens einen weiteren Messung annähernd gleich oder nicht gleich ist.

2. Verfahren nach Anspruch 1,
**dadurch gekennzeichnet, dass** ein detektierter Transmissionsgrad in eine erste Gruppe kategorisiert wird, wenn er bei der ersten und bei der wenigstens einen weiteren Messung annähernd gleich ist, während er in eine zweite Gruppe kategorisiert wird, wenn er bei der ersten und bei der wenigstens einen weiteren Messung nicht gleich ist.

3. Verfahren nach Anspruch 1 oder 2, **dadurch gekennzeichnet, dass** zu der
ersten Messung mit polychromatischem Licht wenigstens zwei weitere Messungen mit monochromatischem Licht unterschiedlicher Wellenlängen durchgeführt werden.

4. Verfahren nach einem Ansprüche 1 bis 3,
**dadurch gekennzeichnet, dass** alle Messungen mit einer Messvorrichtung durchgeführt werden, welche eine Empfängereinheit (30) und eine Lichtquelle (20) aufweist, deren Strahlung sowohl zur Erzeugung polychromatischen als auch monochromatischen Lichts variierbar ist.

5. Verfahren nach einem der Ansprüche 1 bis 4,
**dadurch gekennzeichnet, dass** die Lichtquelle eine flächenhafte diffuse Lichtquelle (20) ist und die Empfängereinheit (30) wenigstens einen ortsauflösenden Empfänger (31;31n) umfasst, zwischen denen das Flachglas-Substrat (40) positioniert wird, und durch eine Auswertung von Helligkeitswerten im Messbild (33;33') des ortsauflösenden Empfängers (31;31n) der Transmissionsgrad ortsaufgelöst in einer Teilfläche des Flachglas-Substrats (40) ermittelt wird, welche vom Messbild (33;33') abgedeckt wird.

6. Verfahren nach einem der Ansprüche 1 bis 5,
**dadurch gekennzeichnet, dass** das Flachglas-Substrat (40) und die Messvorrichtung (10) kontinuierlich so in Relation zueinander bewegt werden, dass die Empfängereinheit (30) im Laufe dieser Bewegung den Lichtdurchtritt durch unterschiedliche Teilbereiche des Flachglas-Substrats (40) erfasst.

7. Verfahren nach Anspruch 6,
**dadurch gekennzeichnet, dass** die Messvorrichtung (10) ortsfest ist, während das Flachglas-Substrat (40) kontinuierlich zwischen der Lichtquelle (20) und der Empfängereinheit (30) hindurch bewegt wird.

8. Verfahren nach einem der Ansprüche 1 bis 7,
**dadurch gekennzeichnet, dass** eine Überprüfung des Transmissionsgrads durch einen Vergleich eines durch die Messvorrichtung (10) ermittelten Transmissionsgrads mit einem Soll-Transmissionsgrad erfolgt.

9. Verfahren nach einem der Ansprüche 1 bis 7, **dadurch gekennzeichnet, dass** die Empfängereinheit (30) mehrere ortsauflösende
Empfänger (31;31n) aufweist, die zur Erfassung von Licht der Lichtquelle (20) ausgebildet sind und deren Messbilder (33;33') durch eine Bildverarbeitungseinheit (51) zu einem Abbild eines flächigen Bereiches des Flachglas-Substrats (40) zusammen gefügt werden.

10. Verfahren nach Anspruch 9,
**dadurch gekennzeichnet, dass** die Empfänger (31;31n) nebeneinander angeordnet sind und ihre Messbilder (33;33') zu einem Abbild eines Streifens des Flachglas-Substrats (40) zusammen gefügt werden, der sich über die gesamte Breite B erstreckt.

11. Verfahren nach Anspruch 9 oder 10,
**dadurch gekennzeichnet, dass** sich die Messbilder (33;33') der Empfänger (31;31n) bereichsweise überlappen.

12. Verfahren nach Anspruch 5 oder einem der Ansprüche 6 bis 11 wenn abhängig von Anspruch 5,
**dadurch gekennzeichnet, dass** Licht der Lichtquelle (20) in wenigstens einem Bereich neben dem Flachglas-Substrat (40) ohne Durchtritt durch das Flachglas-Substrat (40) von der Empfängereinheit (30) erfasst wird.

13. Verfahren nach Anspruch 12,
**dadurch gekennzeichnet, dass** das von der Empfängereinheit (30) ohne Durchtritt durch das Flachglas-Substrat (40) erfasste Licht der Lichtquelle (20) zur Definition eines Referenzwerts für die Kalibrierung der Messvorrichtung (10) verwendet wird.

14. Vorrichtung zur Überprüfung des Transmissionsgrads eines Flachglas-Substrats (40), umfassend eine Messvorrichtung (10) mit wenigstens einer Lichtquelle (20) und wenigstens einer Empfängereinheit (30), mit der Licht der wenigstens einen Lichtquelle (20) von einer Seite des Flachglas-Substrats (40) durch das Flachglas-Substrat (40) hindurch auf die gegenüber liegende Seite des Flachglas-Substrats (40) geleitet werden kann, wo es durch die wenigstens eine Empfängereinheit (30) erfasst wird, und eine Datenverarbeitungseinheit (50) in Verbindung mit der wenigstens einen Lichtquelle (20) und der wenigstens einen Empfängereinheit (30), welche dazu ausgebildet ist, anhand eines Vergleichs zwischen der Intensität des von der wenigstens einen Lichtquelle (20) ausgesandten Lichts und Intensität des auf die wenigstens eine Empfängereinheit (30) fallenden Lichts den Transmissionsgrad des Flachglas-Substrats (40) zu bestimmen, wobei mit einer der wenigstens einen Lichtquelle (20) polychromatisches Licht erzeugbar ist, und die Datenverarbeitungseinheit (50) Mittel zur Bestimmung des Transmissionsgrads an einer Stelle des Flachglas-Substrats (40) anhand dieses polychromatischen Lichts umfasst, das von einer der wenigsten einen Empfängereinheit (30) registriert wird, **dadurch gekennzeichnet, dass** mit einer der wenigstens einen Lichtquelle (20) monochromatisches Licht mit einer definierten Wellenlänge erzeugbar ist, die derart gewählt ist, dass das monochromatische Licht von potentiellen Verunreinigungen im Flachglas-Substrat (40) absorbiert wird, und die Datenverarbeitungseinheit (50) Mittel zur Bestimmung des Transmissionsgrads an der gleichen Stelle des Flachglas-Substrats (40) anhand dieses monochromatischen Lichts umfasst, das von einer der wenigstens einen Empfängereinheit (30) registriert wird, wobei die Datenverarbeitungseinheit (50) ferner zur Durchführung eines Vergleichs der mit dem polychromatischen und mit dem monochromatischen Licht bestimmten Transmissionsgrade ausgebildet ist.

15. Vorrichtung nach Anspruch 14,
**dadurch gekennzeichnet, dass** die Messvorrichtung (10) eine Empfängereinheit (30) und eine Lichtquelle (20) aufweist, deren Strahlung sowohl zur Erzeugung polychromatischen als auch monochromatischen Lichts variierbar ist.

16. Vorrichtung nach Anspruch 14 oder 15,
**dadurch gekennzeichnet, dass** die Lichtquelle eine flächenhafte diffuse Lichtquelle (20) ist und die Empfängereinheit (30) wenigstens einen ortsauflösenden Empfänger (31;31n) umfasst, zwischen denen das Flachglas-Substrat (40) positionierbar ist, und die Datenverarbeitungseinheit (50) ferner dazu ausgebildet ist, durch eine Auswertung von Helligkeitswerten im Messbild (33;33') des ortsauflösenden Empfängers (31;31n) den Transmissionsgrad ortsaufgelöst in einer Teilfläche des Flachglas-Substrats (40) zu ermitteln, welche vom Messbild (33;33') abgedeckt wird.

17. Vorrichtung nach Anspruch 16,
**dadurch gekennzeichnet, dass** die Vorrichtung Mittel zur kontinuierlichen Bewegung des Flachglas-Substrats (40) und der Messvorrichtung (10) in Relation zueinander aufweist, wobei mit der Empfängereinheit (30) im Laufe dieser Bewegung der Lichtdurchtritt durch unterschiedliche Teilbereiche des Flachglas-Substrats (40) erfassbar ist.

18. Vorrichtung nach Anspruch 17,
**dadurch gekennzeichnet, dass** die Messvorrichtung (10) ortsfest ist, während das Flachglas-Substrat (40) kontinuierlich zwischen der Lichtquelle (20) und der Empfängereinheit (30) hindurch bewegt wird.

19. Vorrichtung nach einem der Ansprüche 14 bis 18,
**dadurch gekennzeichnet, dass** die Empfängereinheit (30) mehrere nebeneinander angeordnete Empfänger (31;31n) aufweist.

## Claims

1. A method for verifying the transmittance of a flat-glass substrate (40) with a measuring device (10), with which light of at least one light source (20) is guided from one side of the flat-glass substrate (40) through the flat-glass substrate (40) to the opposite side of the flat-glass substrate (40), where it is captured by at least one receiving unit (30) and the transmittance of the flat-glass substrate (40) is determined by means of a comparison between the intensity of the light emitted by the light source (20) and the light incident upon the receiving unit (30), wherein a light source (20) of the at least one light source generates polychromatic light in a first measurement, the transmittance being determined at a point of the flat-glass substrate (40) by means of the polychromatic light, which is registered by a receiving unit (30) of the at least one receiving unit,
**characterized in that** a light source (20) of the at least one light source generates, in at least one further measurement, monochromatic light of a defined wavelength selected such that the monochromatic light is absorbed by potential impurities in the flat-glass substrate (40), wherein the transmittance of the flat-glass substrate (40) is also determined by means of the monochromatic light registered by a receiving unit (30) of the at least one receiving unit, and it is determined by comparing the first measurement and the at least one further measurement whether the transmittance is approximately the same or not the same in the first and the at least one further measurement.

2. The method according to claim 1,
**characterized in that** a detected transmittance is categorized as belonging into a first group if it is approximately the same in the first and the at least one further measurement, whereas it is categorized as belonging into a second group if it is not the same in the first and the at least one further measurement.

3. The method according to claim 1 or 2,
**characterized in that**, for the first measurement with polychromatic light, at least two further measurements with monochromatic light of different wavelengths are carried out.

4. The method according to any one of the claims 1 to 3,
**characterized in that** all measurements are carried out with a single measuring device, which has a receiving unit (30) and a light source (20) whose radiation can be varied so as to generate both polychromatic and monochromatic light.

5. The method according to any one of the claims 1 to 4,
**characterized in that** the light source is a surface-like diffuse light source (20), and the receiving unit (30) comprises at least one spatially resolving receiver (31; 31n), between which the flat-glass substrate (40) is positioned, and the transmittance is determined in a spatially resolved manner in a partial surface of the flat-glass substrate (40), which is covered by the measuring image (33; 33'), by an evaluation of brightness values in the measuring image (33; 33') of the spatially resolving receiver (31; 31n).

6. The method according to any one of the claims 1 to 5,
**characterized in that** the flat-glass substrate (40) and the measuring device (10) are continuously moved relative to one another in such a manner that over the course of this movement, the receiving unit (30) captures the light passage through different partial areas of the flat-glass substrate (40).

7. The method according to claim 6,
**characterized in that** the measuring device (10) is stationary, whereas the flat-glass substrate (40) is continuously moved through between the light source (20) and the receiving unit (30).

8. The method according to any one of the claims 1 to 7,
**characterized in that** a verification of the transmittance is carried out by means of a comparison of a transmittance determined by the measuring device (10) with a target transmittance.

9. The method according to any one of the claims 1 to 7,
**characterized in that** the receiving unit (30) has several spatially resolving receivers (31; 31n), which are configured for capturing light of the light source (20) and whose measuring images (33; 33') are combined into an image of a planar area of the flat-glass substrate (40) by an image processing unit (51).

10. The method according to claim 9,
**characterized in that** the receivers (31; 31n) are disposed next to one another, and their measuring images (33; 33') are combined into an image of a strip of the flat-glass substrate (40) extending over the entire width B.

11. The method according to claim 9 or 10,
**characterized in that** the measuring images (33; 33') of the receivers (31; 31n) overlap in some areas.

12. The method according to claim 5 or any one of claims 6 to 11 if dependent on claim 5,
**characterized in that** light of the light source (20) is captured by the receiving unit (30) in at least one area next to the flat-glass substrate (40) without passing through the flat-glass substrate (40).

13. The method according to claim 12,
**characterized in that** the light of the light source (20) captured by the receiving unit (30) without passing through the flat-glass substrate (40) is used for defining a reference value for the calibration of the measuring device (10).

14. A device for verifying the transmittance of a flat-glass substrate (40), comprising a measuring device (10) with at least one light source (20) and at least one receiving unit (30), with which light of at least one light source (20) can be guided from one side of the flat-glass substrate (40) through the flat-glass substrate (40) to the opposite side of the flat-glass substrate (40), where it is captured by at least one receiving unit (30), and a data processing unit (50) in connection with the at least one light source (20) and the at least one receiving unit (30), which is configured to determine the transmittance of the flat-glass substrate (40) by means of a comparison between the intensity of the light emitted by the at least one light source (20) and the intensity of the light incident upon the at least one receiving unit (30), wherein polychromatic light can be generated with one of the at least one light source (20), and the data processing unit (50) comprises means for determining the transmittance at a point of the flat-glass substrate (40) by means of this polychromatic light, which is registered by one of the at least one receiving unit (30),
**characterized in that** monochromatic light with a defined wavelength, which is selected such that the monochromatic light is absorbed by potential impurities in the flat-glass substrate (40), can be generated with one of the at least one light source (20), and the data processing unit (50) has means for determining the transmittance at the same point of the flat-glass substrate (40) by means of this monochromatic light, which is registered by one of the at least one receiving unit (30), the data processing unit (50) further being configured for carrying out a comparison of the transmittances determined with the polychromatic and the monochromatic light.

15. The device according to claim 14,
**characterized in that** the measuring device (10) has a receiving unit (30) and a light source (20) whose radiation can be varied so as to generate both polychromatic and monochromatic light.

16. The device according to claim 14 or 15,
**characterized in that** the light source is a surface-like diffuse light source (20), and the receiving unit (30) comprises at least one spatially resolving receiver (31; 31n), between which the flat-glass substrate (40) can be positioned, and the data processing unit (50) is further configured for determining the transmittance in a spatially resolved manner in a partial surface of the flat-glass substrate (40), which is covered by the measuring image (33; 33'), by evaluating brightness values in the measuring image (33; 33') of the spatially resolving receiver (31; 31n).

17. The device according to claim 16,
**characterized in that** the device has means for continuously moving the flat-glass substrate (40) and the measuring device (10) relative to one another, wherein the light passage through different partial areas of the flat-glass substrate (40) can be captured with the receiving unit (30) over the course of this movement.

18. The device according to claim 17,
**characterized in that** the measuring device (10) is stationary, whereas the flat-glass substrate (40) is continuously moved through between the light source (20) and the receiving unit (30).

19. The device according to any one of the claims 14 to 18,
**characterized in that** the receiving unit (30) has several spatially resolving receivers (31; 31n) disposed side-by-side.

## Revendications

1. Procédé, destiné à vérifier la transmittivité d'un substrat en verre plat (40) à l'aide d'un dispositif de mesure (10), avec lequel on dirige de la lumière provenant d'au moins une source lumineuse (20) d'un côté du substrat en verre plat (40) à travers le substrat en verre plat (40) sur le côté opposé du substrat en verre plat (40), où elle est détectée par au moins une unité réceptrice (30) et par une comparaison entre l'intensité de la lumière émise par la source lumineuse (20) et la lumière incidente sur l'unité réceptrice (30), la transmittivité du substrat en verre plat (40) est déterminée, lors d'une première opération de mesure, une source lumineuse (20) parmi les au moins une source lumineuse générant de la lumière polychromatique, la transmittivité étant déterminée sur au moins un point du substrat en verre plat (40) à l'aide de la lumière, qui est enregistrée par une unité réceptrice (30) parmi l'au moins une unité réceptrice, **caractérisé en ce que** pendant au moins une opération de mesure additionnelle, une source lumineuse (20) parmi les au moins une source lumineuse génère de la lumière monochromatique d'une longueur d'ondes définie qui est sélectionnée de telle sorte que la lumière monochromatique soit absorbée par des impuretés potentielles dans le substrat en verre plat (40),
la transmittivité du substrat en verre plat (40) étant également déterminée à l'aide de la lumière monochromatique qui est enregistrée par une unité réceptrice (30) parmi les au moins une unité réceptrice, et il est déterminé par une comparaison de la première opération de mesure et de l'au moins une opération de mesure additionnelle si la transmittivité lors de la première et de l'au moins une opération de mesure additionnelle est approximativement identique ou n'est pas identique.

2. Procédé selon la revendication 1,
**caractérisé en ce que** l'on catégorise une transmittivité détectée dans un premier groupe si elle est approximativement identique lors de la première opération de mesure et de l'au moins une opération de mesure additionnelle, alors qu'on la catégorise dans un deuxième groupe, lorsqu'elle n'est pas identique lors de la première opération de mesure et de l'au moins une opération de mesure additionnelle.

3. Procédé selon la revendication 1 ou 2,
**caractérisé en ce qu'**additionnellement à la première opération de mesure avec de la lumière polychromatique l'on procède à deux opérations de mesure additionnelles avec de la lumière monochromatique de différentes longueurs d'ondes.

4. Procédé selon l'une quelconque des revendications 1 à 3,
**caractérisé en ce que** l'on réalise toutes les opérations de mesure avec un dispositif de mesure, lequel comporte une unité réceptrice (30) et une source lumineuse (20) dont le rayonnement est variable, pour générer aussi bien de la lumière polychromatique que de la lumière monochromatique.

5. Procédé selon l'une quelconque des revendications 1 à 4,
**caractérisé en ce que** la source lumineuse est une source lumineuse (20) diffuse plane et **en ce que** l'unité réceptrice (30) comprend au moins un récepteur (31 ; 31n) à résolution spatiale, entre lesquels l'on positionne le substrat en verre plat (40), et **en ce que** par une évaluation de valeurs de luminosité dans l'image de mesure (33 ; 33') du récepteur (31 ; 31n) à résolution spatiale, l'on détermine la transmittivité avec une résolution spatiale dans une surface partielle du substrat en verre plat (40) que l'on recouvre par l'image de mesure (33 ; 33').

6. Procédé selon l'une quelconque des revendications 1 à 5,
**caractérisé en ce que** l'on déplace en continu l'un par rapport à l'autre en relation mutuelle le substrat en verre plat (40) et le dispositif de mesure (10), de telle sorte qu'au cours dudit déplacement, l'unité réceptrice (30) détecte le passage lumineux à travers différentes zones partielles du substrat en verre plat (40) .

7. Procédé selon la revendication 6,
**caractérisé en ce que** le dispositif de mesure (10) est stationnaire, alors que l'on déplace en continu le substrat en verre plat (40) à travers la source lumineuse (20) et l'unité réceptrice (30).

8. Procédé selon l'une quelconque des revendications 1 à 7,
**caractérisé en ce qu'**il s'effectue une vérification de la transmittivité par une comparaison de la transmittivité déterminée par le dispositif de mesure (10) avec une transmittivité de consigne.

9. Procédé selon l'une quelconque des revendications 1 à 7,
**caractérisé en ce que** l'unité réceptrice (30) comporte plusieurs récepteurs (31 ; 31n) à résolution spatiale, qui sont conçus pour détecter de la lumière de la source lumineuse (20) et dont les images de mesure (33 ; 33') sont regroupées par une unité de traitement d'images (51) en une reproduction d'une zone plane du substrat en verre plat (40).

10. Procédé selon la revendication 9,
**caractérisé en ce que** les récepteurs (31 ; 31n) sont placés côte à côte et **en ce que** leurs images de mesure (33 ; 33') sont regroupées en une reproduction d'une bande du substrat en verre plat (40) qui s'étend sur l'ensemble de la largeur B.

11. Procédé selon la revendication 9 ou 10,
**caractérisé en ce que** les images de mesure (33 ; 33') des récepteurs (31 ; 31n) se chevauchent par endroits.

12. Procédé selon la revendication 5 ou l'une quelconque des revendications 6 à 11, si elle dépend de la revendication 5,
**caractérisé en ce que** de la lumière de la source lumineuse (20) est détectée par l'unité réceptrice (30) dans au moins une zone à côté du substrat en verre plat (40), sans passage à travers le substrat en verre plat (40) .

13. Procédé selon la revendication 12,
**caractérisé en ce que** l'on utilise la lumière de la source lumineuse (20) détectée par l'unité réceptrice (30) sans passage à travers le substrat en verre plat (40) pour la définition d'une valeur de référence pour le calibrage du dispositif de mesure (10).

14. Dispositif, destiné à vérifier la transmittivité d'un substrat en verre plat (40), comprenant un dispositif de mesure (10), comprenant au moins une source lumineuse (20) et au moins une unité réceptrice (30), à l'aide de laquelle de la lumière de l'au moins une source lumineuse (20) peut être dirigée à partir d'un côté du substrat en verre plat (40) à travers le substrat en verre plat (40) sur le côté opposé du substrat en verre plat (40), où elle est détectée par au moins une unité réceptrice (30), et une unité de traitement des données (50) en connexion avec l'au moins une source lumineuse (20) et l'au moins une unité réceptrice (30), laquelle est conçue pour déterminer la transmittivité du substrat en verre plat (40) à l'aide d'une comparaison entre l'intensité de la lumière émise par l'au moins une source lumineuse (20) et l'intensité de la lumière incidente sur l'au moins une unité réceptrice (30), de la lumière polychromatique étant susceptible d'être générée par l'une parmi les au moins une source lumineuse (20), et l'unité de traitement des données (50) comprenant des moyens pour la détermination de la transmittivité sur un point du substrat en verre plat (40) à l'aide de ladite lumière polychromatique qui est enregistrée par l'une parmi les au moins une unité réceptrice (30),
**caractérisé en ce que** par l'une parmi les au moins une source lumineuse (20) est susceptible d'être générée de la lumière monochromatique d'une longueur d'ondes définie, qui est sélectionnée de telle sorte que la lumière monochromatique soit absorbée par des impuretés potentielles dans le substrat en verre plat (40), et l'unité de traitement des données (50) comprenant des moyens pour déterminer la transmittivité sur le même point du substrat en verre plat (40) à l'aide de ladite lumière monochromatique, qui est enregistrée par l'une parmi les au moins une unité réceptrice (30), l'unité de traitement des données (50) étant conçue par ailleurs pour procéder à une comparaison de la transmittivité déterminée avec la lumière polychromatique et avec la lumière monochromatique.

15. Dispositif selon la revendication 14,
**caractérisé en ce que** le dispositif de mesure (10) comporte une unité réceptrice (30) et une source lumineuse (20) dont le rayonnement est variable, pour générer aussi bien de la lumière polychromatique qu'également de la lumière monochromatique.

16. Dispositif selon la revendication 14 ou 15, **caractérisé en ce que** la source lumineuse est une source lumineuse (20) diffuse plane et **en ce que** l'unité réceptrice (30) comprend au moins un récepteur (31 ; 31n) à résolution spatiale, entre lesquels le substrat en verre plat (40) est positionnable et **en ce que** l'unité de traitement des données (50) est conçue par ailleurs pour déterminer la transmittivité avec une résolution spatiale par une évaluation de valeurs de luminosité dans l'image de mesure (33 ; 33') du récepteur (31 ; 31n) à résolution spatiale, dans une surface partielle du substrat en verre plat (40) que l'on recouvre par l'image de mesure (33 ; 33').

17. Dispositif selon la revendication 16,
**caractérisé en ce que** le dispositif comporte des moyens pour le déplacement continu en relation mutuelle du substrat en verre plat (40) et du dispositif de mesure (10), avec l'unité réceptrice (30), le passage de lumière à travers différentes zones partielles du substrat en verre plat (40) étant détectable au cours dudit déplacement.

18. Dispositif selon la revendication 17,
**caractérisé en ce que** le dispositif de mesure (10) est stationnaire, alors que l'on déplace en continu le substrat en verre plat (40) à travers la source lumineuse (20) et l'unité réceptrice (30).

19. Dispositif selon l'une quelconque des revendications 14 à 18,
**caractérisé en ce que** l'unité réceptrice (30) comporte plusieurs récepteurs (31 ; 31n) placés côte à côte.
